Europäisches Patentamt

European Patent Office

Office européen des brevets

(11) Publication number: **0 509 194 A1**

# EUROPEAN PATENT APPLICATION

(21) Application number: **92101669.7**

(22) Date of filing: **01.02.92**

(51) Int. Cl.5: **H04N 9/31**

(30) Priority: **16.04.91 KR 609091**

(43) Date of publication of application:
**21.10.92 Bulletin 92/43**

(84) Designated Contracting States:
**AT BE CH DE DK ES FR GB GR IT LI LU MC
NL PT SE**

(71) Applicant: **GOLDSTAR CO. LTD.
20, Yoido-Dong Yongdungpo-Ku
Seoul(KR)**

(72) Inventor: **Park, Hong Chul
590-1, Kongreung-Dong, Nowon-Ku
Seoul(KR)**

(74) Representative: **Cohausz & Florack
Patentanwälte
Postfach 14 01 61 Schumannstrasse 97
W-4000 Düsseldorf 1(DE)**

(54) Optical system for projector.

(57) An optical system for a projector comprising a light separation/composition member for separating or composing a light at the same time, red, blue and green image modules which are disposed at both sides and rear of the light separation/composition member and are capable of reflecting and dispersing the color lights depending on application of a voltage, a projection lens which is disposed at a front of the light separation/composition member in order to project the color lights reflected and dispersed by the image modules on a screen, a lamp for radiating the light to the light separation/composition member, and a reflector for reflecting the light emitted from the lamp. The light separation/composition member comprises a dichroic mirror or a dichroic prism. The image modules are covered with a polymer dispersed liquid crystal layer which has an electric optic characteristic of transmitting or dispersing the light according to the electric field. The optical system of this invention has advantages of function of keystoning correction, an improved using efficiency of the light, an easy heat radiation and a simple construction.

FIG.5

## BACKGROUND OF THE INVENTION

### Field of The Invention

The present invention relates in general to an optical system for a projector which is provided with a reflection type image module being capable of controlling a luminous intensity of a light by means of a polymer dispersed liquid crystal (PDLC), and more particularly to an optical system for a projector provided with a PDLC image module in which the using efficiency of the light is improved and also of which the construction is simplified, thereby reducing the manufacturing cost.

### Description of The Prior Art

There has been proposed a known optical system for a projector or projection optical system, which is provided with a reflection type image module having an optical characteristic in that it transmits a light under the condition that an electric field is applied thereto but disperses the light under the condition that the electric field is removed. However, the known optical system has disadvantages in that it has a relatively low using efficiency of the light, and induces a problem in radiating a heat, each due to provision of three lamps; furthermore; it has a complex construction due to having to be provided with a plurality of optical elements, thereby causing the assembly therefor to be relatively difficult and also the manufacturing cost to be considerably increased.

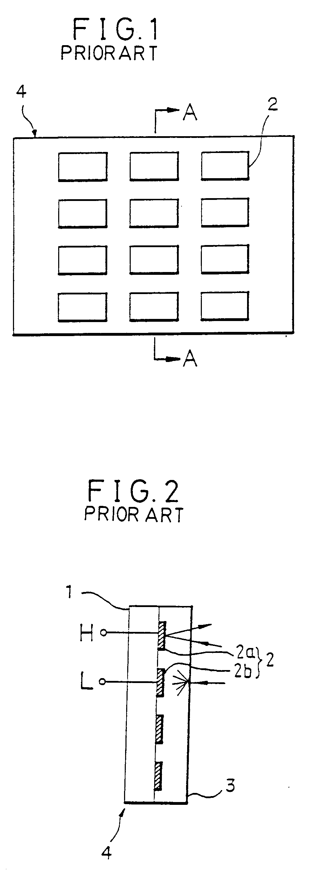

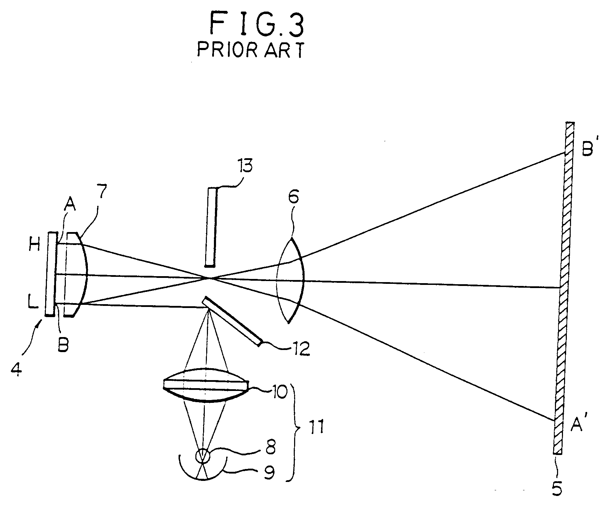

With reference to FIGS. 1 and 2, FIG. 1 is a front view showing a construction of a known image module which is generally used in a conventional projection optical system, FIG. 2 is a sectional view taken along the section line A - A of FIG. 1. As represented, the image module 4 comprises a silicon wafer (Si-wafer) 1 on which a plurality of aluminum pads (Al-pad) 2 are orderly arranged in order to form a matrix. The Si-wafer 1 provided with the Al-pads 2 is covered with a PDLC-layer 3.

When the Al-pads 2 are applied with a high voltage or a low voltage, the image module 4 reflects or disperses the light by virtue of the electric optic characteristic of the PDLC layer 3.

In other words, when one Al-pad 2a is applied with the high voltage, an electric field is generated at the PDLC layer 3 so that the PDLC layer 3 simply transmits the incident light due to the electric optic characteristic thereof. Thus, the incident light having been transmitted through the PDLC layer 3 is reflected by the Al-pad 2a, hence, the Al-pads which are applied with the high voltage reflect the incident light. While, when another Al-pad 2b is applied with the low voltage, the electric field is removed from the PDLC layer 3 so that the PDLC layer 3 disperses the incident light. Thus, the incident light is dispersed at an Al-pad which is applied with the low voltage.

As described above, the PDLC image module 4 is efficiently used for the projection optical system owing to the electric optic characteristic thereof, thus a large video screen is efficiently accomplished.

Turning next to FIG. 3 showing a construction and an operation of a conventional monochrome projection optical system provided with such a reflection type image module, the optical system includes a projection lens 6 which is disposed between the image module 4 and a screen 5, the screen 5 being spaced apart from the image module 4 in a predetermined distance, in order to project the light having been reflected or dispersed by the image module 4 on the screen 5. In addition, a focusing lens 7 is arranged on a front of the image module 4 at a position being close to the image module 4. Disposed at a lower position between the image module 4 and the screen 5 is a light source part 11 which comprises a lamp 8 for emitting a light, a reflector 9 for reflecting the light emitted from the lamp 8, and a condensing lens 10 for condensing the reflected light. A total reflection mirror 12 is arranged on the light source part 11 in order to refract the condensed light toward the focusing lens 7. On the other hand, disposed on the total reflection mirror 12 is a stop 13 for shielding a noise, such as an outside light.

In operation of the known monochrome projection optical system, the light emitted from the lamp 8 is first reflected by the reflector 9, and condensed by the condensing lens 10, then refracted by the total reflection mirror 12, thereafter received by the image module 4 by way of the focusing lens 7. A part of the incident light which has been received in a "A" part of the image module 4, the "A" part being a high voltage part, is simply reflected by the image module 4 so as to be applied to the projection lens 6 by way of the focusing lens 7 and the stop 13 in turn; thereafter, projected by the projection lens 6 on the screen 5. Thus; the image reemerges as a bright point "A'" on the screen 5. While, another part of the incident light which has been received in a "B" part of the image module 4, the "B" part being a low voltage part, is dispersed by the image module 4. As a result, a minute part of the dispersed light is applied to the projection lens 6 by way of the focusing lens 7 and the stop 13, thereafter, projected by the projection lens 6 on the screen 5 in order to cause an image to reemerge as a dark point "B'" on the screen 5.

As described above, upon using the reflection type image module 4, a desired image comprising a bright part and a dark part reemerges on a screen 5 by virtue of the reflection/dispersion characteristics of the image module 4, thereby making it possible to accomplish the monochrome projection optical system.

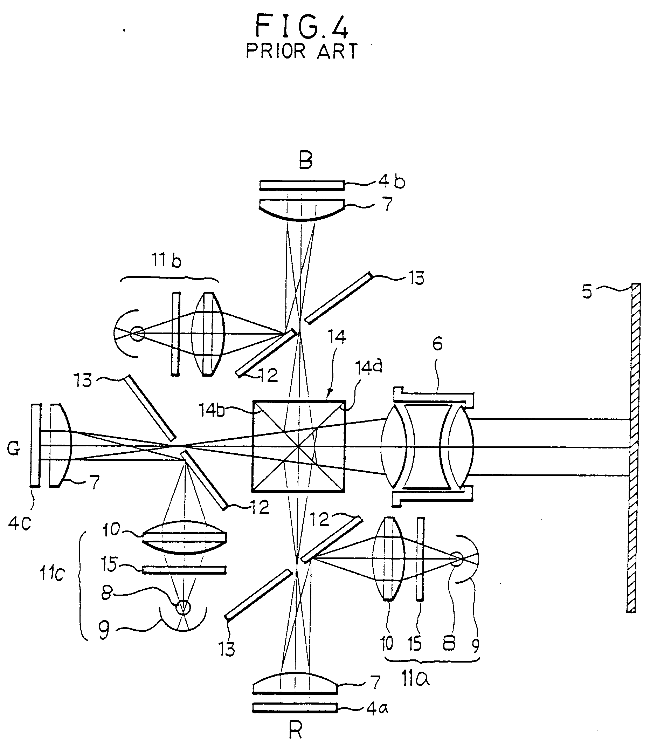

FIG. 4 is a plane view showing a construction and an operation of a conventional color projection optical system which uses the PDLC image module. As represented, the optical system has a dichroic prism 14 which is adapted for composing the respective color lights and also provided with first to third image modules, that is, red, blue and green image modules 4a, 4b and 4c which are disposed at three positions parallel to the surfaces of the prism 14, that is, both side surface and a rear surface, respectively. Disposed at each lower middle portion between each image module 4a, 4b, 4c and the prism 14 is a light source part, that is, red, blue or green light source part 11a, 11b, 11c which comprises a lamp 8 for emitting a light, a reflector 9 for reflecting the light emitted from the lamp 8, a color filter 15 for filtering a corresponding color light by reflecting or transmitting, and a condensing lens 10 for condensing the filtered color light. Here, the color filters 15 of the light source parts 11a to 11c comprise red color, blue color and green color filters. A total reflection mirror 12 is arranged over each light source part 11a, 11b, 11c in order to refract the condensed light toward the image module 4a, 4b, 4c. On the other hand, disposed on the total reflection mirror 12 is a stop 13 for shielding an outside light. A focusing lens 7 is disposed at a position near each image module 4a, 4b, 4c. In addition, disposed at a front of the dichroic prism 14 is a projection lens 6 which is adapted for projecting the composed color light which has been composed by the dichroic prism 14 on a screen 5 in order to cause a desired color image to reemerge on the screen 5.

In the above construction, the projection lens 6 is commonly used for projecting the respective colors. In addition, the dichroic prism 14 comprises a red light reflection mirror surface 14a which is capable of reflecting a red light but transmitting the other color lights, and a blue light reflection mirror surface 14b which is capable of reflecting a blue light but transmitting the other color lights.

In operation of the above color projection optical system, the lamp 8 of the red light source part 11a emits a light which is to be reflected by the reflector 9. The red filter 15 filters the reflected light in order to transmit a red light but reflect the other color lights. The red light transmitted through the red filter 15 is then applied to the total reflection mirror 15 so as to be reflected thereby toward the focusing lens 7 at which the red light is refracted so as to be received in the first image module 4a. In the first image module 4a, the incident light is then controlled in the light energy thereof by virtue of the reflection/dispersion of the image module 4a, thereafter, applied to the dichroic prism 14. Sequentially, the red light received in the prism 14 is reflected by the red reflection mirror surface 14a of the prism 14 toward the projection lens 6 so as to be projected on the screen. In result, a red color image reemerges on the screen 5.

On the other hand, the light emitted from the lamp 8 of the green light source part 11c is filtered by the green light filter 15 in order to cause the green light to transmit through the green light filter 15, then passed through the similar passage to that of the above-mentioned red light so as to be finally applied to the dichroic prism 14. In the dichroic prism 14, the green light simply transmits through the red light and the blue light reflection mirror surfaces 14a and 14b of the prism 14 so as to be projected on the screen 5 by means of the projection lens 6, thereby causing a green color image to reemerge on the screen 5. In the same manner, the blue light is applied to the dichroic prism 14 so as to be reflected by the blue light reflection mirror surface 14b thereof, then projected on the screen 5 by means of the projection lens 6. In result, a blue color image reemerges on the screen 5.

According to the above-mentioned procedure, three color images are projected on the screen 5, respectively; in order to cause a desired color image to reemerge thereon.

However, the known color projection optical system has disadvantage in that it has relatively complex construction due to the three light source parts and induces a problem in radiating a heat due to the provision of the three lamps. Furthermore, the known color projection optical system has other disadvantages in that the light emitted from each lamp is filtered by means of a corresponding color filter in order to select a desired color light, thereby reducing the using efficiency of the light, and it has to be provided with a plurality of optical elements, thereby inducing a difficulty in assembling the system and also increasing the manufacturing cost for the system.

SUMMARY OF THE INVENTION

It is, therefore, an object of this invention to provide an optical system for a projector which is capable of solving the above disadvantages, and comprises light separation/composition means for separating and also composing a light at the same time, three image modules each being capable of forming reflection/dispersion pattern in accordance with a color video signal, a lamp for emitting the light, and a projection lens for projecting the reflection/dispersion patterns represented on the surfaces of the image modules on a screen in order to cause a desired image to reemerge on the screen, thereby improving the using efficiency of the light and also reducing the number of the optical elements resulting in simplifying the optical system and reducing the manufacturing cost.

The above-mentioned object of this invention can be accomplished by providing an optical system for a projector comprising: light separation/composition member for separating or composing a light at the same time, a plurality of image modules being disposed at both sides and rear of said light separation/composition member and being capable of reflecting and dispersing the color lights depending on being applied with a voltage, a projection lens being disposed at a front of the light separation/composition member in order to project the color lights reflected and dispersed by the image modules on a screen, a lamp for radiating the light to the light separation/composition member, and a reflector for reflecting the light emitted from the lamp.

BRIEF DESCRIPTION OF THE DRAWINGS

The above and other objects, features and other advantages of the present invention will be more clearly understood from the following detailed description taken in conjunction with the accompanying drawings, in which:

FIGS. 1 and 2 show a construction of a conventional reflection type image module in accordance with the prior art, in which:

FIG. 1 is a front view; and

FIG. 2 is a sectional view taken along the section line A-A of FIG. 1;

FIGS. 3 and 4 show a construction of a conventional optical system for a projector in accordance with the prior art, in which:

FIG. 3 is a plane view of an optical system for a monochrome projector; and

FIG. 4 is a plane view of an optical system for a color projector;

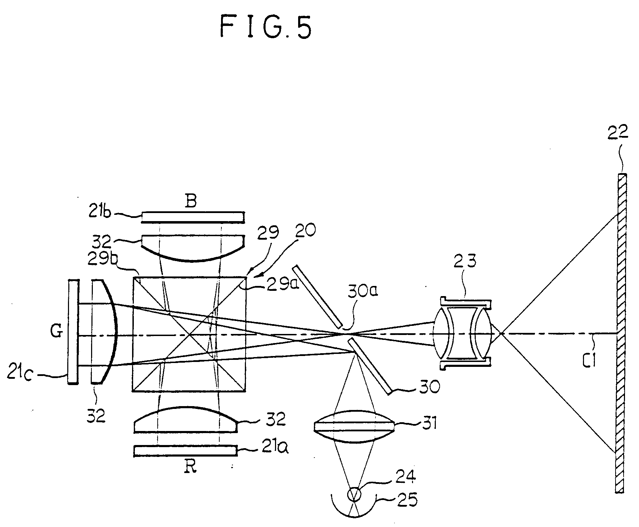

FIG. 5 is a plane view showing an embodiment of an optical system for a projector using PDLC image modules in accordance with the present invention;

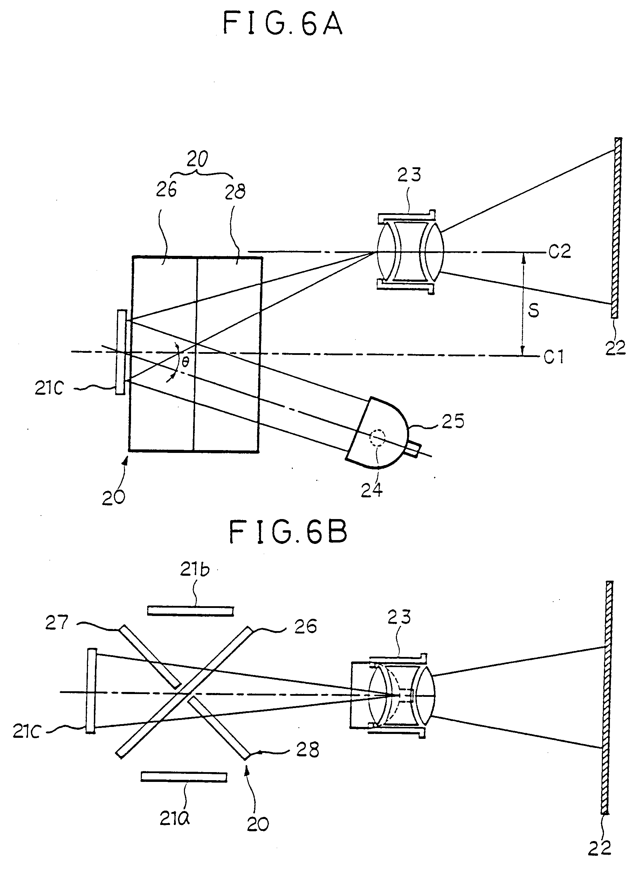

FIGS. 6A and 6B show another embodiment of an optical system for a projector using PDLC image modules in accordance with the present invention, in which:

FIG. 6A is a side view; and

FIG. 6B is a plane view;

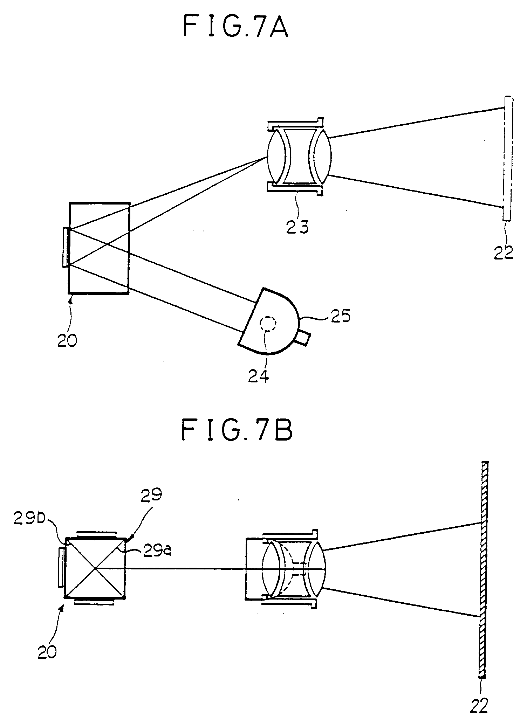

FIGS. 7A and 7B show still another embodiment of an optical system for a projector using PDLC image modules in accordance with the present invention, in which:

FIG. 7A is a side view; and

FIG. 7B is a plane view;

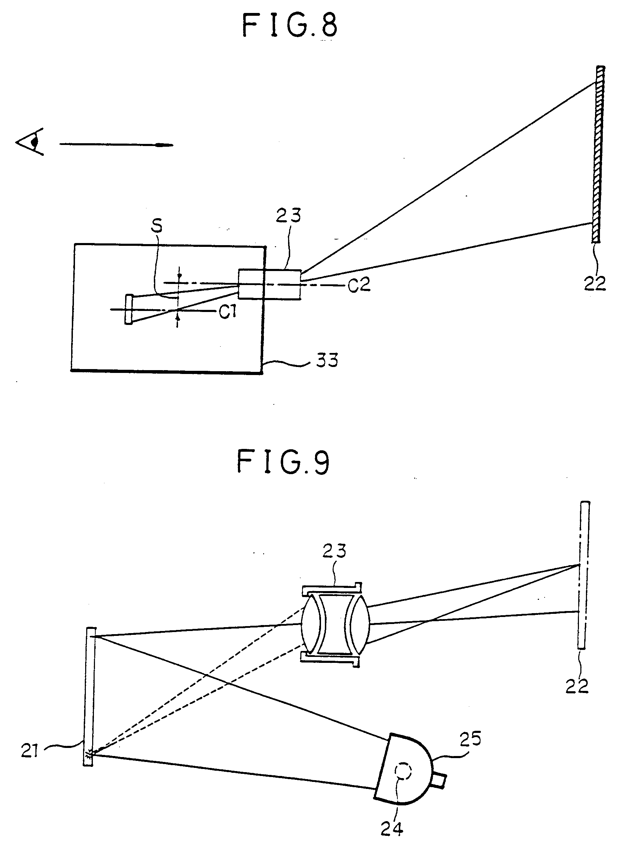

FIG. 8 is a schematic view showing the relation between the optical path of a projection lens and the center axis of an image module in case of projecting an image on a screen with correction of the keystoning;

FIG. 9 is a schematic view showing a relation between the reflection/dispersion and the brightness of the screen; and

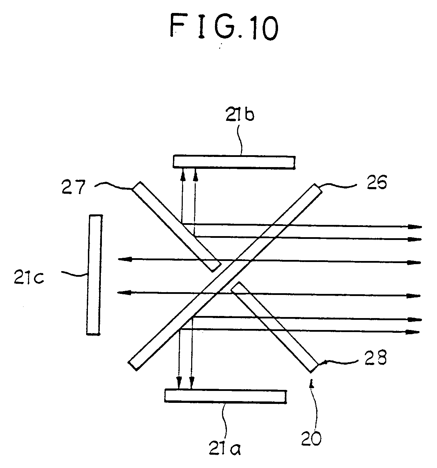

FIG. 10 is a schematic view showing separation and composition of color lights.

DESCRIPTION OF THE PREFERRED EMBODIMENTS

Referring first to FIG. 5 showing a first embodiment of an optical system for a projector using PDLC image modules in accordance with the present invention, the optical system comprises a light separation/composition member 20 for separating a light at the same time and also composing the lights at the same time, a first to a third image modules, that is, red, blue and green image modules 21a to 21c being disposed at both sides and rear of the light separation/composition member 20, respectively, and being capable of reflecting and dispersing the color lights upon being applied with a voltage, a projection lens 23 being disposed at a front of the light separation/composition member 20 in order to project the lights having been reflected and dispersed by the image modules 21a to 21c on a screen 22, a lamp 24 for radiating the light to the light separation/composition member 20, and a reflector 25 for reflecting said light emitted from the lamp 24.

The projection lens 23 is arranged on a center axis $C_1$ of the third image module 21c in order to be perpendicular to the mounting surface of the image module 21c.

In addition, The lamp 24 and the reflector 25 are sequentially arranged at lower positions vertically spaced apart from a middle of the center axis $C_1$ of the third image module 21c. Thus; the light emitted from the lamp 24 is first reflected by the reflector 25; then received by he respective image modules 21a to 21c by way of the light separation/composition member 20. A total reflection mirror 30 having an opening 30a is disposed between the light separation/composition member 20 and the projection lens 23 such that the opening 30a is arranged on the center axis $C_1$.

There is additionally provided a condensing lens 31 which is disposed at a front of the lamp 24 in order to condense the light having been emitted from the lamp 24 to the total reflection mirror 30.

The size of the opening 30a of the total reflection mirror 30 affects the contrast of the image so that the opening 30a has to be formed as having an appropriate size. In addition, disposed at a front of each image module 21a, 21b, 21c is a focusing lens 32.

Each focusing lens 32 condenses the light, which has been reflected by the image module 21a, 21b, 21c, onto the total reflection mirror 30. When the power of the focusing lens 32 is higher, The color of the image is obliged to change, thereby selecting a focusing lens having a proper power.

In addition, the light separation/composition member 20 comprises a dichroic prism 29 which includes a red light reflection mirror surface 29a which is capable of reflecting a red light but transmitting the other color lights, and a blue light reflection mirror surface 29b which is capable of reflecting a blue light but transmitting the other color lights.

In operation of the above first embodiment of an optical system, the light emitted from the lamp 24 is first applied as an incident light to the total reflection mirror 30 at which the incident light is reflected thereby in order to be applied to the light separation/composition member 20.

On the other hand, the incident light which is applied to the light separation/composition member 20 has the three primary colors, that is: red, green and blue colors. Thus, upon being applied with the incident light, the light separation/composition member 20 separates the incident light into the three primary color lights which are then applied to the image modules 21a to 21c, respectively.

If described in detail; the red light of the incident light is reflected by the red light reflection mirror surface 29a; then applied to the first image module, that is, the red (R) image module 21a, while the green light of the incident light is transmitted through the red and blue light reflection mirror surfaces 29a and 29b in order to be then applied to the third image module, that is, the green (G) image module 21c. On the other hand, the blue light of the incident light is reflected by the blue light reflection mirror surface 29b, then applied to the second image module; that is, the blue (B) image module 21b.

Thereafter, the respective color lights having been applied to the respective image modules 21a to 21c are reflected and dispersed by the image modules 21a to 21b due to the electric optic characteristics of the image modules 21a to 21c, then applied to the projection lens 23 by way of the light separation/composition member 20 in order to be projected on the screen 22 by the projection lens 23, thereby causing a desired color image to reemerge on the screen 22.

FIGS. 6a and 6B show a second embodiment of an optical system for a projector using PDLC image modules in accordance with the present invention, respectively. As represented, the optical system comprises a light separation/composition member 20 for separating a light into respective color lights at the same time and also composing the lights at the same time, a first to a third image modules 21a to 21c being disposed at both sides and rear of the light separation/composition member 20, respectively, and being capable of reflecting and dispersing the color lights depending on being applied with a voltage. A projection lens 23 is disposed at a front of the light separation/composition member 20 in order to project the color lights having been reflected and dispersed by the image modules 21a to 21c on a screen 22. There are additionally provided in the system a lamp 24 for radiating the light to the light separation/composition member 20, and a reflector 25 for reflecting said light emitted from the lamp 24.

The projection lens 23 is arranged such that it is disposed at an upper position being vertically spaced apart from the center axis $C_1$ of the third image module 21c in a predetermined distance S in order to be parallel to the center axis $C_1$, in addition, the optical path $C_2$ thereof is perpendicular to the mounting surface of the image module 21c. Hence, the color lights are projected on the screen disposed at an upper position with respect to the center axis $C_1$ of the third image module 21c, thereby causing the desired color image to reemerge without occurrence of the keystoning, in which keystoning the image reemerged on the screen 22 generally appears as a reversed trapezoidal shape and also the image is so defocused at the relatively upper portion thereof that the image is not clear, on the screen 22 which is upwardly eccentric with respect to the projector 33 as shown in FIG. 8. As a result, the optical system shown in FIGS. 6a and 6B has the function of keystoning correction.

In addition, The lamp 24 and the reflector 25 are arranged as spaced apart from a middle of the center axis $C_1$ of the third image module 21c and also as inclined with respect to the center axis $C_1$ at a predetermined angle of inclination of $\theta$. Thus, the light emitted from the lamp 24 is first reflected by the reflector 25, then applied to the respective image modules 21a to 21c by way of the light separation/composition member 20.

As shown in FIG. 6B, the light separation/composition member 20 comprises a dichroic mirror 28 which includes a piece of red light reflection mirror 26 which is capable of reflecting a red light but transmitting the other color lights, and two pieces of blue light reflection mirrors 27 each of which is capable of reflecting a blue light but transmitting the other color lights. As represented, the two types of reflection mirrors 26 and 27 are arranged in order to cross each other, thereby having a general X-shape.

In operation of the above second embodiment of an optical system, the light emitted from the lamp 24 is first reflected by the reflector, then applied as an incident light to the light separation/composition member 20.

Here, the incident light which is applied to the light separation/composition member 20 has the three primary colors, that is, red, green and blue colors. Thus, upon being applied with the incident light, the light separation/composition member 20 separates the incident light into the three primary colors which are to be applied to the image modules 21a to 21c, respectively.

If described in detail, the red light of the incident light is reflected by the red light reflection mirror 26, then applied to the first image module; that is, the red (R) image module 21a, while the green light of the incident light is transmitted through the red and blue light reflection mirrors 26 and 27 in order to be then applied to the third image module, that is, the green (G) image module 21c. On the other hand, the blue light of the incident light is reflected by the blue light reflection mirror 27, then applied to the second image module, that is, the blue (B) image module 21b.

Thereafter, the red, green and blue color lights having been applied to the respective image modules 21a to 21c are reflected and dispersed by the image modules 21a to 21b due to the electric optic characteristics of the image modules 21a to 21c, then applied to the projection lens 23 by way of the light separation/composition member 20 in order to be projected on the screen 22 by the projection lens 23, thereby causing a desired color image to reemerge on the screen 22.

As described above, the optical system for a projector according to this invention is provided with one lamp 24 from which a light is emitted in order to be last applied to the projection lens 23, thereby providing advantages in that the using efficiency of the light is considerably improved, the heat radiation can be easily accomplished, the construction thereof is simplified and the manufacturing cost therefor is considerably reduced due to the reduction of the number of the optical elements. Furthermore, the optical system is arranged in order to cause the projection lens 23 thereof to be eccentric from the center axis $C_1$ of the green image module 21c, thereby providing another advantage in that the keystoning of the image on the screen can be easily overcome without addition of an auxiliary device for compensating the keystoning, thus the image on the screen is uniformly focused as represented in FIG. 8.

In addition, FIGS. 7A and 7B show still another embodiment of an optical system for a projector using PDLC image modules in accordance with the present invention. As represented, the optical system includes a dichroic prism 29 as the light separation/composition member 20, the dichroic prism 29 having a red light reflection mirror surface 29a and a blue light reflection mirror surface 29b. The optical system of these drawings provides the same operational effect as that of the second embodiment shown in FIGS. 6A and 6B.

The optical system for a projector of this invention can be efficiently used for a video projector and a projection television system regardless of monochrome type and color type, furthermore, it can be henceforth applied to a display for a HDTV system.

Although the preferred embodiments of the present invention have been disclosed for illustrative purpose, those skilled in the art will appreciate that various modifications, additions and substitutions are possible, without departing from the scope and spirit of the invention as disclosed in the accompanying claims.

**Claims**

1. An optical system for a projector comprising:
   light source means for emitting the light and also reflecting said light;
   light separation/composition means for separating the light into red, green and blue lights at the same time and also composing the red, green and blue lights at the same time;
   red, green and blue image modules each of which is capable of reflecting and also dispersing a corresponding color light; and
   a projection lens for projecting the color lights, which lights have been reflected and dispersed by said image modules, on a screen.

2. An optical system according to claim 1, wherein said light source means comprises a lamp for emitting said light, a reflector for reflecting the light and a condensing lens for condensing the light.

3. An optical system according to claim 2, wherein said optical system further comprises a total reflection mirror which is disposed between said condensing lens and said light separation/composition means and adapted for condensing the light having been condensed by the condensing lens to the light separation/composition means.

4. An optical system according to claim 3, wherein said total reflection mirror has an opening formed at a center thereof, and is arranged in order to allow said opening to be disposed on a center axis of said light separation/composition means and said projection lens.

5. An optical system according to claim 1, wherein said projection lens is arranged such that it is disposed at an upper position being spaced apart from a center axis of said green image module in a predetermined distance in order to be parallel to said center axis of the green image module, in addition, an optical path thereof is perpendicular to a mounting surface of the green image module, thereby correcting a keystoning.

6. An optical system according to claim 2, wherein said lamp is arranged as downwardly spaced apart from a center axis of said green image module and also as inclined with respect to said center axis of the green image module at a predetermined angle of inclination, thereby causing said light having been reflected by said reflector to be applied to the respective image modules by way of said light separation/composition means.

7. An optical system according to claim 1, wherein said light separation/composition means comprises a dichroic mirror.

8. An optical system according to claim 1, wherein said light separation/composition means comprises a dichroic prism.

## FIG.1
### PRIOR ART

## FIG.2
### PRIOR ART

# F I G.3
## PRIOR ART

# FIG.4
## PRIOR ART

# F I G.5

# FIG. 6A

# FIG. 6B

FIG.7A

FIG.7B

# FIG.8

# FIG.9

# F I G.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-9 102 249 (TAKIZAWA K.) | 1-3,7,8 | H04N9/31 |
| Y | * abstract; figures 4,5 * | 5,6 | |
| P,X | & EP-A-0 436 738 (TAKIZAWA K.) | 1-3,7,8 | |
| P,Y | * column 14, line 23 - column 15, line 17 * | 5,6 | |
| | --- | | |
| Y | EP-A-0 294 898 (N.V. PHILIPS' GLOEILAMPENFABRIEKEN) | 5,6 | |
| A | * column 3, line 48 - column 4, line 51 * | 1-3,7 | |
| | --- | | |
| X | PATENT ABSTRACTS OF JAPAN vol. 12, no. 25 (P-659)26 January  1988 & JP-A-62 180 343 ( HITACHI LTD ) | 1-4,7 | |
| A | * abstract; figure 6 * | 5,6,8 | |
| | --- | | |
| X | EP-A-0 364 043 (N.V. PHILIPS' GLOEILAMPENFABRIEKEN) | 1,2,8 | |
| A | * column 8, line 32 - column 10, line 23 * | 5,6 | |
| | --- | | |
| X | PATENT ABSTRACTS OF JAPAN vol. 13, no. 344 (E-797)(3692) 3 August 1989 & JP-A-1 103 390 ( SEIKO ) * abstract * | 1,2,8 | TECHNICAL FIELDS SEARCHED (Int. Cl.5) |
| | ----- | | H04N |

The present search report has been drawn up for all claims

| Place of search | Date of completion of the search | Examiner |
|---|---|---|
| THE HAGUE | 06 JULY 1992 | PIGNIEZ T.J.P. |

EPO FORM 1503 03.82 (P0401)